Europäisches Patentamt

European Patent Office

Office européen des brevets

(19)

(11) Publication number: **0 126 741**
**B1**

# (12) EUROPEAN PATENT SPECIFICATION

(45) Date of publication of patent specification: **22.10.86**

(51) Int. Cl.⁴: $A\ 01\ K\ 83/00$

(21) Application number: **83903590.4**

(22) Date of filing: **18.11.83**

(86) International application number:
**PCT/NO83/00051**

(87) International publication number:
**WO 84/02057 07.06.84 Gazette 84/14**

(54) **FISHING HOOK PROTECTOR.**

(30) Priority: **22.11.82 NO 823898**

(43) Date of publication of application:
**05.12.84 Bulletin 84/49**

(45) Publication of the grant of the patent:
**22.10.86 Bulletin 86/43**

(84) Designated Contracting States:
**BE FR GB NL**

(56) References cited:
**WO-A-81/02504**
**US-A- 779 744**
**US-A-2 514 110**
**US-A-2 733 533**

(73) Proprietor: **BJÖRSHOL, Kolbjörn**
**N-6560 Langöyneset (NO)**

(72) Inventor: **BJÖRSHOL, Kolbjörn**
**N-6560 Langöyneset (NO)**

(74) Representative: **Warren, Anthony Robert et al**
**BARON & WARREN 18 South End Kensington**
**London W8 5BU (GB)**

Courier Press, Leamington Spa, England.

## Description

The present invention relates to a protector or guard for a fish hook, the purpose of which primarily is to prevent the hook becoming entangled in ropes, other hooks or the like, although it may also serve to prevent the hook from causing damage.

Such protection is of particular importance in long line fishing, wherein several thousand hooks are connected to the individual line, and wherein such a line, prior to the baiting and setting, is stored on a drum or on rails with all the hooks freely suspended, or in a bin.

The protector to which the invention relates is of the type which comprises a sheet-formed portion provided with a channel-formed portion along each of two edges, the channel-formed portions being adapted to receive the leg and the curved point, respectively, of a fish hook.

A protector of this general type is disclosed in US—A—2,733,533, in which the channel portions are formed along two edges of a triangular sheet portion, and open towards each other. One channel portion is formed with an integral tubular extension which is spaced from the other channel portion by a slot. In use, the protection is permanently slidably mounted on a fishing line, with the line and associated leader or snood passing through the tubular portion. Such a protector is relatively complicated and expensive to manufacture, and a substantial amount of material is wasted during manufacture. Moreover, the protector is permanently secured to the line, which, in practice, is inconvenient.

It is an object of the present invention to substantially reduce or effectively eliminate these disadvantages.

According to the invention the channel-formed portions extend generally parallel to each other, with their longitudinally extending openings facing outwardly from the sheet-formed portion. With such a shape of protector, one channel-formed portion may be placed around the hook leg, while the hook point, by displacement of the protector along the hook leg, is passed into a protected position in the second channel-formed portion, the hook being also easily released by displacement of the protector along the hook leg or by tearing.

The protector may be produced in a very simple manner, such as by extruding a plastics material to the desired section, succeeded by cutting the ribbon-like extruded section into lengths. The channel-formed portion which is to receive the hook leg may take the form of a claw-formed section having resilient walls and a slot which opens in the desired direction, while the portion which is to receive the hook point may be made with a V- or U-shaped cross-section. The portion which is to receive the hook leg may be annular in cross-section.

The invention will be described in more detail with reference to the accompanying drawings, in which:

Figure 1 is a perspective view, partly in section, of a fish hook protector according to a preferred embodiment of the invention;

Figure 2 is a perspective view of the protector in position on a fish hook; and

Figure 3 is a sectional view of the channel-formed portion of the protector which is adapted to receive a hook leg.

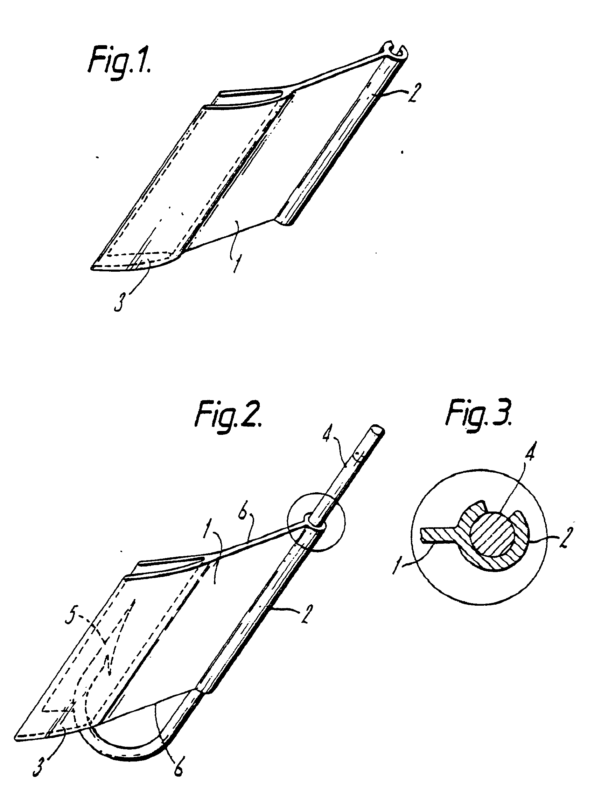

In the drawing, 1 is a sheet-formed portion which, along two edges which extend parallel to each other, merge into an open, channel-formed portion 2 of claw-shaped section, and an open portion 2 of essentially V-formed section, respectively. The protector may, preferably, be made of extruded, relatively soft plastics material, and may be a cut off length of an extruded ribbon or string, so that the channel 2 may easily be placed or sprung on, and kept on, the leg 4 of a fish hook, at the same time as the channel 3 encloses the curved part 5 of the fish hook. In order to prevent the protector becoming entangled in ropes or other hooks, it is convenient to give the sheet-formed middle portion the shape of a rhombus, the free edges 6 slanting towards the two channels, as shown in Figure 1.

Such protection is of particular importance in long line fishing, in which thousands of hooks are connected to the individual line, and wherein the line, prior to baiting and setting, is stored on a drum or on rails with all the hooks freely suspended, or in a bin.

## Claims

1. A fish hook protector of the type which comprises a sheet-formed portion (1) provided with a channel-formed portion (2, 3) along each of two edges, the channel-formed portions being adapted to receive the leg (4) and the curved point (5), respectively, of a fish hook, characterised in that the channel-formed portions (2, 3) extend generally parallel to each other, and in that their longitudinally extending openings face outwardly from the sheet-formed portion (1).

2. A fish hook protector as claimed in claim 1, characterised in that one channel-formed portion (2) is of generally claw-formed section having resilient walls adapted to be placed around and retained on the leg (4) of a fish hook, while the other channel-formed portion (3) is of a section adapted to shield the curved point (5) of the fish hook.

3. A fish hook protector as claimed in claim 1 or 2, characterised in that the sheet-formed portion (1) and the channel-formed portions (2, 3) are portions of a unitary, ribbon-like element made of plastics material.

4. A fish hook protector as claimed in claim 3, characterised in that the ribbon-like element is a plastics extrusion.

5. A fish hook protector as claimed in any preceding claim, characterised in that the channel-formed portion (3) which is intended to receive the curved point (5) of a hook is V-shaped or U-shaped in cross-section.

6. A fish hook protector as claimed in any preceding claim, characterised in that the channel-formed portion (2) which is intended to receive the leg (4) of a hook is annular in cross-section.

7. A fish hook protector as claimed in any preceding claim, characterised in that the sheet-formed portion (1) is rhombic.

## Patentansprüche

1. Fischhaken-Schutzvorrichtung von der Art, die einen blattförmigen Teil (1) versehen mit einem rinnenförmigen Teilstück (2, 3) je entlang zweier Kanten umfaßt, wobei die rinnenförmigen Teilstücke den Schenkel (4) bzw. die gekrümmte Spitze eines Fischhakens aufnehmen, dadurch gekennzeichnet, daß die rinnenförmigen Teilstücke (2, 3) sich allgemein parallel zueinander erstrecken und daß ihre längsweise verlaufenden Öffnungen auswärts vom blattförmigen Teilstück (1) gerichtet sind.

2. Fischhaken-Schutzvorrichtung nach Anspruch 1, dadurch gekennzeichnet, daß ein rinnenförmiges Teilstück (2) allgemein einen klauenförmigen Querschnitt mit federnden Wänden aufweist, die um den Schenkel (4) eines Fischhakens gelegt und dort festgehalten werden können, während das andere rinnenförmige Teilstück (3) einen Schnitt aufweist, der zum Abschirmen der gekrümmten Spitze (5) des Fischhakens dient.

3. Fischhaken-Schutzvorrichtung nach Anspruch 1 oder 2, dadurch gekennzeichnet, daß das blattförmige Teilstück (1) und die rinnenförmigen Teilstücke (2, 3) Teile eines einheitlichen rippenartigen Elementes aus Kunststoff darstellen.

4. Fischhaken-Schutzvorrichtung nach Anspruch 3, dadurch gekennzeichnet, daß das rippenförmige Teil durch Strangpressen von Kunststoff hergestellt wird.

5. Fischhaken-Schutzvorrichtung nach einem der vorausgehenden Ansprüche, dadurch gekennzeichnet, daß das rinnenförmige Teilstück (3), das die gekrümmte Spitze (5) eines Hakens aufnehmen soll, V- oder U-förmigen Querschnitt aufweist.

6. Fischhaken-Schutzvorrichtung nach einem der vorherigen Ansprüche, dadurch gekennzeichnet, daß das rinnenförmige Teilstück (2), das den Schenkel (4) eines Hakens aufnehmen soll, runden Querschnitt aufweist.

7. Fischhaken-Schutzvorrichtung nach einem der vorhergehenden Ansprüche, dadurch gekennzeichnet, daß das blattförmige Teilstück (1) rhombisch ist.

## Revendications

1. Dispositif de protection pour hameçon de pêche du type comprenant une partie en forme de feuille (1) pourvue d'une partie en forme de canal (2, 3) suivant deux de ses bords, les parties en forme de canal étant adaptées pour recevoir respectivement la branche (4) et la pointe arrondie (5) d'un hameçon de pêche, caractérisé en ce que les parties en forme de canal (2, 3) s'étendent sensiblement parallèlement l'une à l'autre, et en ce que leurs ouvertures s'étendant longitudinalement sont orientées vers l'extérieur à partir de la partie en forme de feuille (1).

2. Dispositif de protection pour hameçon de pêche suivant la revendication 1, caractérisé en ce que la partie en forme de canal (2) est de section sensiblement en forme de pince comportant des parois souples adaptées pour être placées autour de la branche (4) d'un hameçon de pêche et pour être retenues sur celle-ci, l'autre partie en forme de canal (3) étant d'une section adaptée pour protéger la pointe arrondie (5) de l'hameçon de pêche.

3. Dispositif de protection pour hameçon de pêche suivant l'une ou l'autre des revendications 1 et 2, caractérisé en ce que la partie en forme de feuille (1) et les parties en forme de canal (2, 3) sont des parties d'un élément en forme de bande, unitaire fait d'une matière plastique.

4. Dispositif de protection pour hameçon de pêche suivant la revendication 3, caractérisé en ce que l'élément en forme de bande est un élément extrudé en matière plastique.

5. Dispositif de protection pour hameçon de pêche suivant l'une quelconque des revendications précédentes, caractérisé en ce que la partie en forme de canal (3) qui est utilisée pour recevoir la point arrondie (5) d'un hameçon a une section transversale en forme V ou de U.

6. Dispositif de protection pour hameçon de pêche suivant l'une quelconque des revendications précédentes, caractérisé en ce que la partie en forme de canal (2) qui est utilisée pour recevoir la branche (4) d'un hameçon est de section transversale annulaire.

7. Dispositif de protection pour hameçon de pêche suivant l'une quelconque des revendications précédentes, caractérisé en ce que la partie en forme de feuille (1) a la forme d'un losange.

# Fig.1.

# Fig.2.

# Fig.3.